(19) Europäisches Patentamt
European Patent Office
Office européen des brevets

(11) **EP 3 514 073 B1**

(12) **EUROPEAN PATENT SPECIFICATION**

(45) Date of publication and mention
of the grant of the patent:
**14.07.2021 Bulletin 2021/28**

(21) Application number: **17850336.3**

(22) Date of filing: **08.09.2017**

(51) Int Cl.:
**B65B 55/22** *(2006.01)* **A23L 3/00** *(2006.01)*
**B65B 3/04** *(2006.01)*

(86) International application number:
**PCT/ES2017/070603**

(87) International publication number:
**WO 2018/050936 (22.03.2018 Gazette 2018/12)**

(54) **METHOD FOR PACKAGING FOOD CAPSULES AND PACKAGED FOOD PRODUCT PRODUCED BY MEANS OF SAME**

VERFAHREN ZUM VERPACKEN VON NAHRUNGSMITTELKAPSELN UND DADURCH VERPACKTES NAHRUNGSMITTELPRODUKT

PROCÉDÉ DE CONDITIONNEMENT DE CAPSULES ALIMENTAIRES ET PRODUIT ALIMENTAIRE CONDITIONNÉ AU MOYEN DUDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2016 ES 201631199**

(43) Date of publication of application:
**24.07.2019 Bulletin 2019/30**

(73) Proprietor: **Caviaroli, S.L.**
**08292 Esparreguera (Barcelona) (ES)**

(72) Inventors:
• **RAMON REAL, Ramon**
**08230 Matadepera (Barcelona) (ES)**
• **RAMON FERRES, Ramon Maria**
**08292 Esparreguera (Barcelona) (ES)**

(74) Representative: **Durán-Corretjer, S.L.P.**
**Còrsega, 329**
**(Paseo de Gracia/Diagonal)**
**08037 Barcelona (ES)**

(56) References cited:
**ES-A1- 2 345 601     ES-A1- 2 345 601**
**US-A1- 2012 003 285**

• **Anonymous: "EL CLÁSICO VERMUT, AHORA TE VENDRÁ DE PERLAS.", GASTROLOPIA, 9 May 2015 (2015-05-09), XP055475683, Retrieved from the Internet: URL:https://www.whereismytie.com/single-po st/2015/05/09/EL-CLÁSICO-VERMUT-AHORA-TE -V ENDRÁ-DE-PERLAS [retrieved on 2018-05-16]**
• **Anonymous: "CAVIAROLI PRODUCTOS", CAVIAROLI , 13 May 2016 (2016-05-13), XP009514163, Retrieved from the Internet: URL:https://web.archive.org/web/2016031519 5253/http://caviaroli.eu/productos/ [retrieved on 2016-12-16]**
• **Anonymous: "PROMOFOOD - Deluxe your Brand", PROMOFOOD World , 25 October 2015 (2015-10-25), XP009514162, Retrieved from the Internet: URL:http://web.archive.org/web/20151025023 717/http://www.promofoodworld.com/MENU/Del uxe-your-Brand/ [retrieved on 2016-12-16]**
• **"El cásico vermut, ahora te vendra en perlas", GASTROLOPIA, 12 May 2015 (2015-05-12), XP055475683, Retrieved from the Internet: URL:http://www.gastrolopia.com/blog/tag/es ferificacion [retrieved on 2016-12-16]**

Remarks:
The file contains technical information submitted after the application was filed and not included in this specification

**Description**

The present invention relates to a method for packaging capsules, in particular capsules comprising food substances therein. In addition, the present invention relates to the packaged food product, obtained by means of the method of the present invention.

The food capsules to which the present invention relates may be coated by a polymer, for example, alginate, agar etc.

In the case of capsules coated with an alginate film, which contain a food substance therein, said capsules may be obtained either by a process commonly referred to as "reverse spherification" or by "direct spherification". Usually, the basic or direct spherification process is used, in which a droplet or droplets of the product to be encapsulated surrounded by a film of non-calcium alginate are dropped into a bath containing a source of calcium ions, generally calcium chloride. On the other hand, in reverse spherification, the substance to be encapsulated is mixed with a source of calcium or magnesium ions, for example, calcium chloride. Then, a droplet, or any other form, is formed with said mixture of the substance to be encapsulated and calcium or magnesium ions and it is introduced into a solution containing non-calcium alginate, for example sodium alginate. When the formed droplet containing calcium ions makes contact with the alginate-containing solution, a semisolid and gelatinous outer film is formed almost instantaneously, which holds the substance to be encapsulated therein.

The reverse spherification process is a process known in the prior art. For example, the PCT Patent Application WO2011/138478 discloses a reverse spherification process in which carbonated beverages such as sparkling wines are encapsulated. Spanish Patent Application No. ES2015730737 discloses spherical capsules in which the substances to be encapsulated may be fruit juices and pastes, olives, dairy products, infusions, seasoned products, vinegars, spirits, wines, alcoholic beverages, fermented juices (for example, soy-based), or any water-based substance in liquid state or resulting from the extraction of any type of solid of which the juice has a preferably aqueous content. ES 2345601 A1 discloses a method for packaging food capsules which comprises the step of introducing capsules inside of which there is a food substance in a container containing a first liquid. This document also discloses a packaged food product according to the preamble of claim 8.

The alginate film surrounding said food capsules must be sufficiently fragile so that, when consumed, it breaks easily in the mouth and allows the release of the encapsulated substance. Usually, once obtained, these capsules are packaged in a can containing between 1 and 20,000 capsules, depending on the size of the capsules and the size of the can in which they will be packaged, always surrounded by a first liquid, which has a higher density than the density of said capsules. However, the inventors of the present patent have observed that the food capsules, once packaged, might break during transport or if the boxes experience some type of bump or fall. Said breakage might represent up to 20% of the packaged capsules, which leads to a high product loss and, in addition, the content of the released encapsulated substance will affect the quality of the product that the rest of the capsules contain.

Therefore, there is a need to obtain a packaging method and a product obtained that completely prevents the breakage of these capsules during transport or possible bumps they might receive.

The inventor of the present patent has discovered that with the use of a second liquid that has a density lower than the first liquid, as a layer with a certain thickness above the solution surrounding the capsules, that is, in the first liquid, it is possible to avoid breaking them during transport. With the substances being encapsulated and, in addition, surrounded by a first liquid, said second liquid is situated in the upper part of the container, cushioning the contact between the capsules and the lid of the can in which they are packaged.

Therefore, the present invention discloses a method of packaging food capsules comprising the following steps:

a) introducing capsules inside of which there is a food substance in a container containing a first liquid;

b) adding a second liquid with a density lower than that of the first liquid so that the layer of the second liquid in the container has a thickness of at least 0.5 cm; and

c) proceeding to capping, labelling and final packaging of the product obtained.

In the method of the present invention, preferably the encapsulated food substance may be water-based and may be selected from fruit juices and pastes, olives, dairy products, infusions, seasoned products, vinegars, spirits, wines, alcoholic beverages, fermented juices (for example, soy-based), or any water-based substance in liquid state or resulting from the extraction of any type of solid of which the juice has a preferably aqueous content. It may also be oil-based and may be selected from a vegetable oil selected from the list comprising olive oil, sunflower oil, hazelnut oil, sesame oil, walnut oil, almond oil, cottonseed oil, avocado oil, peanut oil, canola oil, safflower oil, coconut oil, corn oil, palm oil, soybean oil and mixtures thereof. In addition, said vegetable oils might be mixed with seasonings, flavourings and flavours, and other oil soluble additives. Other types of oily substances that might be encapsulated using the method of the present invention are essential oils selected from the list comprising thyme oil (*Thymus vulgaris*), oregano oil (*Origanum vulgaris*), clove oil (*Syzygium aromaticum*), nutmeg oil (*Myristica fragrans*), cinnamon oil (*Cinnamomum*

*zeylanicum*), bay oil (*Laurus nobilis*), orange oil (Citrus x sinensis), peppermint oil (*Mentha x piperita*), valerian oil (*Valeriana officinalis*), citronella oil (*Cymbopogon nardus*), lavender oil (*Lavandula angustifolia*), jojoba oil (*Simmondsia californica*), rosemary oil (*Rosemarinus officianalis*), neem oil (*Azadirachta indica*), cottonseed oil (*Gossypium hirsutum*), rosehip oil (*Rosa eglanteria*) or mixtures thereof.

It is also conceivable for the encapsulated food substance to be an emulsion.

In the method of the present invention, the number of capsules that may be added to the package is between 1 and 20,000.

As mentioned above, the thickness of the second liquid layer is at least 0.5 cm, preferably at least 1.0 cm, more preferably at least 1.5 cm, even more preferably at least 2 cm, more preferably at least 2.5 cm, even more preferably at least 3.0 cm, even more preferably at least 5.0 cm and most preferably at least 10 cm.

Furthermore, preferably, the food capsule of the method of the present invention is characterized in that the diameter of said food capsule is in the range of 1 mm to 50 mm, preferably in the range of 5 mm to 50 mm, more preferably from 10 mm to 50 mm, even more preferably from 15 mm to 50 mm, from 20 mm to 50 mm, from 25 mm to 50 mm and more preferably from 30 mm to 50 mm.

Preferably, the first liquid is an aqueous solution and the second liquid is an edible oil.

It is obvious to a person skilled in the art that the edible oil that may be used in the method of the present invention can be any edible oil, preferably olive oil.

Thus, the present invention also relates to a packaged food product characterized in that it comprises a package containing food capsules, comprising a first liquid surrounding the capsules and a second liquid in its upper part, of which the second liquid layer has a thickness of at least 0.5cm.

As mentioned above, in said food product the thickness of the second liquid layer is at least 0.5 cm, preferably at least 1.0 cm, more preferably at least 1.5 cm, even more preferably at least 2.0 cm, more preferably at least 2.5 cm, even more preferably at least 3.0 cm, even more preferably at least 5.0 cm and most preferably at least 10 cm.

Furthermore, preferably, the food capsule of the food product of the present invention is characterized in that the diameter of said food capsule is in the range of 1 mm to 50 mm, preferably in the range of 5 mm to 50 mm, more preferably 10 mm to 50 mm, even more preferably from 15 mm to 50 mm, from 20 mm to 50 mm, from 25 mm to 50 mm and more preferably from 30 mm to 50 mm.

For a better understanding, the present invention is described below with reference to the following example, which in no case is intended to be limiting of the present invention.

## EXAMPLE

Example 1. Packaging of olive pulp food capsules according to the method of the present invention.

An olive pulp (100%) was made and 2% calcium lactate by weight and 0.5% xanthan gum by weight were added. The solution to be encapsulated was agitated until homogeneous. In addition, a 0.5% sodium alginate solution by weight was prepared at pH 4.0. Next, the solution to be encapsulated was introduced into a bath at room temperature and droplets of the solution to be encapsulated were dropped into the bath. The resulting spheres were collected after 20 minutes and placed in a bath with water in order to be washed. They were drained and packaged into a can containing 1% aqueous NaCl solution by weight and 10% maltodextrin by weight. Said containers were divided into several groups, in which an amount of olive oil was added so that the layer of said oil had a thickness of 0.25, 0.5, 1.0, 1.5, 2.0, 2.5, 3, 5 and 10 cm, respectively. A control group was used, to which the oil layer was not added.

The containers were placed in boxes containing 16 cans. These boxes were dropped in free fall from a height of 1, 2 and 3 m. These heights simulate the possible water hammer that boxes can receive during handling and transport. Subsequently, the capsules that did not break were counted and the damage % was calculated as follows:

$$\text{Damage \%} = 100 - (\text{No. final capsules}/ \text{No. initial capsules})*100$$

The results are shown in Table 1 below:

Table 1. Damage percentage of packaged capsules.

| Oil height (cm) | Falling height (m) | No. of initial capsules | No. of final capsules | Damage % |
|---|---|---|---|---|
| 0 | 1 | 20 | 20 | 0 % |
| 0 | 2 | 20 | 20 | 0 % |
| 0 | 3 | 20 | 19 | 5 % |

(continued)

| Oil height (cm) | Falling height (m) | No. of initial capsules | No. of final capsules | Damage % |
|---|---|---|---|---|
| 0 | 3 | 20 | 16 | 20 % |
| 0.25 | 1 | 20 | 19 | 5 % |
| 0.25 | 2 | 20 | 19 | 5 % |
| 0.25 | 3 | 20 | 17 | 15 % |
| 0.5 | 1 | 20 | 20 | 0 % |
| 0.5 | 2 | 20 | 20 | 0 % |
| 0.5 | 3 | 20 | 20 | 0 % |
| 1 | 1 | 20 | 20 | 0 % |
| 1 | 2 | 20 | 20 | 0 % |
| 1 | 3 | 20 | 20 | 0 % |
| 1 | 3 | 20 | 20 | 0 % |
| 1 | 3 | 20 | 20 | 0 % |
| 1 | 3 | 20 | 20 | 0 % |
| 1 | 3 | 20 | 20 | 0 % |
| 1 | 3 | 20 | 20 | 0 % |
| 1 | 1 | 20 | 20 | 0 % |
| 1 | 1 | 20 | 20 | 0 % |
| 1.5 | 2 | 20 | 20 | 0 % |
| 1.5 | 2 | 20 | 20 | 0 % |
| 1.5 | 3 | 20 | 20 | 0 % |
| 1.5 | 3 | 20 | 20 | 0 % |
| 2 | 3 | 20 | 20 | 0 % |
| 2 | 3 | 20 | 20 | 0 % |
| 2 | 3 | 20 | 20 | 0 % |
| 2 | 3 | 20 | 20 | 0 % |
| 2 | 3 | 20 | 20 | 0 % |
| 2 | 3 | 20 | 20 | 0 % |
| 2 | 3 | 20 | 20 | 0 % |
| 2 | 3 | 20 | 20 | 0 % |
| 2 | 1 | 18 | 18 | 0 % |
| 2 | 1 | 18 | 18 | 0 % |
| 2.5 | 2 | 18 | 18 | 0 % |
| 2.5 | 2 | 18 | 18 | 0 % |
| 2.5 | 3 | 18 | 18 | 0 % |
| 2.5 | 3 | 18 | 18 | 0 % |
| 2.5 | 3 | 18 | 18 | 0 % |
| 2.5 | 3 | 18 | 18 | 0 % |
| 2.5 | 3 | 18 | 18 | 0 % |

(continued)

| Oil height (cm) | Falling height (m) | No. of initial capsules | No. of final capsules | Damage % |
|---|---|---|---|---|
| 2.5 | 3 | 18 | 18 | 0 % |
| 2.5 | 3 | 18 | 18 | 0 % |
| 2.5 | 3 | 18 | 18 | 0 % |
| 2.5 | 3 | 18 | 18 | 0 % |
| 2.5 | 3 | 18 | 18 | 0 % |
| 2.5 | 1 | 20 | 20 | 0 % |
| 2.5 | 2 | 20 | 20 | 0 % |
| 3 | 3 | 20 | 20 | 0 % |
| 3 | 1 | 20 | 20 | 0 % |
| 3 | 2 | 20 | 20 | 0 % |
| 3 | 3 | 20 | 20 | 0 % |
| 3 | 3 | 20 | 20 | 0 % |
| 3 | 3 | 20 | 20 | 0 % |
| 3 | 1 | 20 | 20 | 0 % |
| 3 | 1 | 20 | 20 | 0 % |
| 3 | 2 | 20 | 20 | 0 % |
| 3 | 2 | 20 | 20 | 0 % |
| 3 | 3 | 20 | 20 | 0 % |
| 3 | 3 | 20 | 20 | 0 % |
| 3 | 3 | 20 | 20 | 0 % |
| 3 | 3 | 20 | 20 | 0 % |
| 5 | 3 | 20 | 20 | 0 % |
| 5 | 3 | 20 | 20 | 0 % |
| 5 | 3 | 20 | 20 | 0 % |
| 10 | 3 | 20 | 20 | 0 % |
| 10 | 3 | 20 | 20 | 0 % |
| 10 | 3 | 20 | 20 | 0 % |

As it is observed in the previous Table, if the oil layer in the can has a thickness of at least 0.5 cm, the damage percentage is 0, which means there is effective protection of all the packaged food capsules.

Although the invention has been described with respect to examples of preferred embodiments, these should not be considered as limiting the invention, which will be defined by the following claims.

**Claims**

1. Method for packaging food capsules comprising the following steps:

a) introducing capsules inside of which there is a food substance in a container containing a first liquid;
b) adding a second liquid with a density lower than that of the first liquid so that the layer of the second liquid in the container has a thickness of at least 0.5 cm; and
c) proceeding to capping, labelling and final packaging of the product obtained.

**2.** Method, according to claim 1, **characterized in that** the encapsulated food substance is water-based and is selected from fruit juices and pastes, olives, dairy products, infusions, seasoned products, vinegars, spirits, wines, alcoholic beverages, fermented juices, soy-based as an example, or any water-based substance in liquid state or resulting from the extraction of any type of solid of which the juice has a preferably aqueous content.

**3.** Method, according to claim 1, **characterized in that** the encapsulated food substance is oil-based and is selected from a vegetable oil selected from the list comprising olive oil, sunflower oil, hazelnut oil, sesame oil, walnut oil, almond oil, cottonseed oil, avocado oil, peanut oil, canola oil, safflower oil, coconut oil, corn oil, palm oil, soybean oil, essential oils selected from the list comprising thyme oil (*Thymus vulgaris*), oregano oil (*Origanum vulgaris*), clove oil (*Syzygium aromaticum*), nutmeg oil (*Myristica fragrans*), cinnamon oil (*Cinnamomum zeylanicum*), bay oil (*Laurus nobilis*), orange oil (*Citrus x sinensis*), peppermint oil (*Mentha x piperita*), valerian oil (*Valeriana officinalis*), citronella oil (*Cymbopogon nardus*), lavender oil (*Lavandula angustifolia*), jojoba oil (*Simmondsia californica*), rosemary oil (*Rosemarinus officianalis*), neem oil (*Azadirachta indica*), cottonseed oil (*Gossypium hirsutum*), rosehip oil (*Rosa eglanteria*) or mixtures thereof.

**4.** Method, according to claims 1 to 3, **characterized in that** the number of capsules in said container is between 1 and 20,000.

**5.** Method, according to claims 1 to 4, **characterized in that** the thickness of the second liquid is at least 1.0 cm, or at least 1.5 cm, or at least 2.0 cm, or at least 2.5 cm, or at least 3.0 cm, or at least 5.0 cm, or at least 10.0 cm.

**6.** Method, according to any one of claims 1 to 5, **characterized in that** the capsules have a diameter from 1 mm to 50 mm, or from 5 mm to 50 mm, or from 10 to 50 mm, or from 15 mm to 50 mm, or from 20 mm to 50 mm, or from 25 mm to 50 mm, or from 30 mm to 50 mm.

**7.** Method, according to any one of the preceding claims, **characterized in that** the first liquid is an aqueous solution and the second liquid is an edible oil.

**8.** Packaged food product which comprises a package containing food capsules and a first liquid surrounding the capsules **characterized in that** the packaged food product further comprises a second liquid in its upper part, of which the second liquid layer has a thickness of at least 0.5 cm.

**9.** Food product, according to claim 8, **characterized in that** the first liquid is an aqueous solution and the second liquid is an edible oil.

**10.** Food product, according to claim 8 or 9, **characterized in that** the number of food capsules in said container is between 1 and 20,000.

**11.** Food product, according to any one of claims 8 to 10, **characterized in that** the thickness of the layer of the second liquid is at least 1.0 cm, or at least 1.5 cm, or at least 2.0 cm, or at least 2.5 cm, or at least 3.0 cm, or at least 3.0 cm, or at least 5.0 cm, or at least 10 cm.

**12.** Food product, according to any one of claims 8 to 11, **characterized in that** the capsules have a diameter from 1 mm to 50 mm, or from 5 mm to 50 mm, or from 10 to 50 mm, or from 15 mm to 50 mm, or from 20 mm to 50 mm, or from 25 mm to 50 mm, or from 30 mm to 50 mm.

**Patentansprüche**

**1.** Verfahren zum Verpacken von Nahrungsmittelkapseln, umfassend die folgenden Schritte:

a) Einbringen von Kapseln, in deren Innerem sich eine Lebensmittelsubstanz befindet, in einen Behälter, der eine erste Flüssigkeit enthält;
b) Hinzufügen einer zweiten Flüssigkeit mit einer geringeren Dichte als die der ersten Flüssigkeit, so dass die Schicht der zweiten Flüssigkeit in dem Behälter eine Dicke von mindestens 0,5 cm aufweist; und
c) Fortfahren mit Verschließen, Etikettieren und Endverpacken des erhaltenen Produkts.

**2.** Verfahren nach Anspruch 1, **dadurch gekennzeichnet, dass** die eingekapselte Lebensmittelsubstanz auf Wasserbasis ist und ausgewählt ist aus Fruchtsäften und -pasten, Oliven, Milchprodukten, Aufgüssen, gewürzten Produkten, Essigen, Spirituosen, Weinen, alkoholischen Getränken, fermentierten Säften, auf Sojabasis als Beispiel, oder irgendeiner Substanz auf Wasserbasis in flüssigem Zustand oder resultierend aus der Extraktion jeglicher Art von Feststoff, dessen Saft einen vorzugsweise wässrigen Gehalt hat.

3. Verfahren nach Anspruch 1, **dadurch gekennzeichnet, dass** die eingekapselte Lebensmittelsubstanz auf Ölbasis ist und ausgewählt ist aus einem Pflanzenöl, ausgewählt aus der Liste umfassend Olivenöl, Sonnenblumenöl, Haselnussöl, Sesamöl, Walnussöl, Mandelöl, Baumwollsamenöl, Avocadoöl, Erdnussöl, Rapsöl, Distelöl, Kokosnussöl, Maisöl, Palmöl, Sojabohnenöl, ätherischen Ölen, ausgewählt aus der Liste, umfassend Thymianöl (*Thymus vulgaris*), Oreganoöl (*Origanum vulgaris*), Nelkenöl (*Syzygium aromaticum*), Muskatnussöl (*Myristica fragrans*), Zimtöl (*Cinnamomum zeylanicum*), Lorbeeröl (*Laurus nobilis*), Orangenöl (*Citrus x sinensis*), Pfefferminzöl (*Mentha x piperita*), Baldrianöl (*Valeriana officinalis*), Citronellaöl (*Cymbopogon nardus*), Lavendelöl (*Lavandula angustifolia*), Jojobaöl (*Simmondsia californica*), Rosmarinöl (*Rosemarinus officinalis*), Neemöl (*Azadirachta indica*), Baumwollsamenöl (*Gossypium hirsutum*), Hagebuttenöl (*Rosa eglanteria*) oder Mischungen daraus.

4. Verfahren nach einem der Ansprüche 1 bis 3, **dadurch gekennzeichnet, dass** die Anzahl der Kapseln in dem Behälter zwischen 1 und 20.000 liegt.

5. Verfahren nach einem der Ansprüche 1 bis 4, **dadurch gekennzeichnet, dass** die Dicke der zweiten Flüssigkeit mindestens 1,0 cm, oder mindestens 1,5 cm, oder mindestens 2,0 cm, oder mindestens 2,5 cm, oder mindestens 3,0 cm, oder mindestens 5,0 cm, oder mindestens 10,0 cm beträgt.

6. Verfahren nach einem der Ansprüche 1 bis 5, **dadurch gekennzeichnet, dass** die Kapseln einen Durchmesser von 1 mm bis 50 mm, oder von 5 mm bis 50 mm, oder von 10 bis 50 mm, oder von 15 mm bis 50 mm, oder von 20 mm bis 50 mm, oder von 25 mm bis 50 mm, oder von 30 mm bis 50 mm aufweisen.

7. Verfahren nach einem der vorhergehenden Ansprüche, **dadurch gekennzeichnet, dass** die erste Flüssigkeit eine wässrige Lösung ist und die zweite Flüssigkeit ein Speiseöl ist.

8. Verpacktes Nahrungsmittelprodukt, das eine Verpackung umfasst, die Nahrungsmittelkapseln und eine erste Flüssigkeit, die die Kapseln umgibt, enthält, **dadurch gekennzeichnet, dass** das verpackte Nahrungsmittelprodukt ferner eine zweite Flüssigkeit in seinem oberen Teil umfasst, wobei die zweite Flüssigkeitsschicht eine Dicke von mindestens 0,5 cm aufweist.

9. Lebensmittelprodukt nach Anspruch 8, **dadurch gekennzeichnet, dass** die erste Flüssigkeit eine wässrige Lösung ist und die zweite Flüssigkeit ein Speiseöl ist.

10. Lebensmittelprodukt nach Anspruch 8 oder 9, **dadurch gekennzeichnet, dass** die Anzahl der Lebensmittelkapseln in dem Behälter zwischen 1 und 20.000 liegt.

11. Lebensmittelprodukt nach einem der Ansprüche 8 bis 10, **dadurch gekennzeichnet, dass** die Dicke der Schicht der zweiten Flüssigkeit mindestens 1,0 cm, oder mindestens 1,5 cm, oder mindestens 2,0 cm, oder mindestens 2,5 cm, oder mindestens 3,0 cm, oder mindestens 3,0 cm, oder mindestens 5,0 cm, oder mindestens 10 cm beträgt.

12. Lebensmittelprodukt nach einem der Ansprüche 8 bis 11, **dadurch gekennzeichnet, dass** die Kapseln einen Durchmesser von 1 mm bis 50 mm, oder von 5 mm bis 50 mm, oder von 10 bis 50 mm, oder von 15 mm bis 50 mm, oder von 20 mm bis 50 mm, oder von 25 mm bis 50 mm, oder von 30 mm bis 50 mm aufweisen.

**Revendications**

1. Procédé de conditionnement de capsules alimentaires comprenant les étapes suivantes :

   a) introduire des capsules à l'intérieur desquelles se trouve une substance alimentaire dans un récipient contenant un premier liquide ;
   b) ajouter un deuxième liquide ayant une densité inférieure à celle du premier liquide de façon que la couche du deuxième liquide dans le récipient ait une épaisseur d'au moins 0,5 cm ; et
   c) procéder au bouchage, à l'étiquetage et à l'emballage final du produit obtenu.

2. Procédé, selon la revendication 1, **caractérisé en ce que** la substance alimentaire encapsulée est à base d'eau et est choisie parmi les jus et pâtes de fruits, les olives, les produits laitiers, les infusions, les produits assaisonnés, les vinaigres, les spiritueux, les vins, les boissons alcoolisées, les jus fermentés, par exemple, à base de soja, ou toute substance à base d'eau à l'état liquide ou résultant de l'extraction à partir de tout type de solide dont le jus a de préférence une teneur aqueuse.

3. Procédé, selon la revendication 1, **caractérisé en ce que** la substance alimentaire encapsulée est à base d'huile et est choisie parmi une huile végétale choisie dans la liste comprenant l'huile d'olive, l'huile de tournesol, l'huile de noisette, l'huile de sésame, l'huile de noix, l'huile d'amande, l'huile de coton, l'huile d'avocat, l'huile d'arachide, l'huile de canola, l'huile de carthame, l'huile de noix de coco, l'huile de maïs, l'huile de palme, l'huile de soja, les huiles essentielles choisies dans la liste comprenant l'huile de thym (*Thymus vulgaris*), l'huile d'origan (*Origanum vulgaris*), l'huile de clou de girofle (*Syzygium aromaticum*), l'huile de noix de muscade (*Myristica fragrans*), l'huile de cannelle (*Cinnamomum zeylanicum*), l'huile de laurier (*Laurus nobilis*), l'huile d'orange (*Citrus x sinensis*), l'huile de menthe poivrée (*Mentha x piperita*), l'huile de valériane (*Valeriana officinalis*), l'huile de citronnelle (*Cymbopogon nardus*), l'huile de lavande (*Lavandula angustifolia*), l'huile de jojoba (*Simmondsia californica*), l'huile de romarin (*Rosemarinus officianalis*), l'huile de margousier (*Azadirachta indica*), l'huile de coton (*Gossypium hirsutum*), l'huile d'églantier (*Rosa eglanteria*) ou leurs mélanges.

4. Procédé, selon les revendications 1 à 3, **caractérisé en ce que** le nombre de capsules dans ledit récipient est compris entre 1 et 20000.

5. Procédé, selon les revendications 1 à 4, **caractérisé en ce que** l'épaisseur du deuxième liquide est d'au moins 1,0 cm, ou d'au moins 1,5 cm, ou d'au moins 2,0 cm, ou d'au moins 2,5 cm, ou d'au moins 3,0 cm, ou d'au moins 5,0 cm, ou d'au moins 10,0 cm.

6. Procédé, selon l'une quelconque des revendications 1 à 5, **caractérisé en ce que** les capsules ont un diamètre allant de 1 mm à 50 mm, ou de 5 mm à 50 mm, ou de 10 mm à 50 mm, ou de 15 mm à 50 mm, ou de 20 mm à 50 mm, ou de 25 mm à 50 mm, ou de 30 mm à 50 mm.

7. Procédé, selon l'une quelconque des revendications précédentes, **caractérisé en ce que** le premier liquide est une solution aqueuse et le deuxième liquide est une huile comestible.

8. Produit alimentaire conditionné qui comprend un emballage contenant des capsules alimentaires et un premier liquide entourant les capsules, **caractérisé en ce que** le produit alimentaire conditionné comprend en outre un deuxième liquide dans sa partie supérieure, dont la couche de deuxième liquide a une épaisseur d'au moins 0,5 cm.

9. Produit alimentaire, selon la revendication 8, **caractérisé en ce que** le premier liquide est une solution aqueuse et le second liquide est une huile comestible.

10. Produit alimentaire, selon la revendication 8 ou la revendication 9, **caractérisé en ce que** le nombre de capsules alimentaires dans ledit récipient est compris entre 1 et 20 000.

11. Produit alimentaire, selon l'une quelconque des revendications 8 à 10, **caractérisé en ce que** l'épaisseur de la couche du second liquide est d'au moins 1,0 cm, ou d'au moins 1,5 cm, ou d'au moins 2,0 cm, ou d'au moins 2,5 cm, ou d'au moins 3,0 cm, ou d'au moins 5,0 cm, ou d'au moins 10 cm.

12. Produit alimentaire, selon l'une quelconque des revendications 8 à 11, **caractérisé en ce que** les capsules ont un diamètre allant de 1 mm à 50 mm, ou de 5 mm à 50 mm, ou de 10 mm à 50 mm, ou de 15 mm à 50 mm, ou de 20 mm à 50 mm, ou de 25 mm à 50 mm, ou de 30 mm à 50 mm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011138478 A
- ES 2015730737
- ES 2345601 A1